(19) Europäisches Patentamt
European Patent Office
Office européen des brevets

(11) **EP 4 518 482 A1**

(12) **EUROPEAN PATENT APPLICATION**
published in accordance with Art. 153(4) EPC

(43) Date of publication:
05.03.2025 Bulletin 2025/10

(51) International Patent Classification (IPC):
*H04W 72/04* (2023.01)    *H04B 7/06* (2006.01)
*H04L 5/00* (2006.01)

(21) Application number: 22939404.4

(22) Date of filing: 29.04.2022

(52) Cooperative Patent Classification (CPC):
H04B 7/06; H04L 5/00; H04W 72/04

(86) International application number:
PCT/CN2022/090767

(87) International publication number:
WO 2023/206560 (02.11.2023 Gazette 2023/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Beijing Xiaomi Mobile Software Co.,
Ltd.
Beijing 100085 (CN)

(72) Inventor: GAO, Xueyuan
Beijing 100085 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **PHYSICAL UPLINK CONTROL CHANNEL (PUCCH) TRANSMISSION METHOD AND APPARATUS, COMMUNICATION DEVICE, AND STORAGE MEDIUM**

(57)    Embodiments of the present disclosure provide a physical uplink control channel (PUCCH) transmission method and apparatus, a communication device, and a storage medium. The PUCCH transmission method executed by a terminal may comprise: multiple antenna panels of a terminal perform PUCCH transmission according to transmission configuration indications (TCIs), wherein different antenna panels correspond to different TCIs.

FIG. 2

**Description**

**TECHNICAL FIELD**

The disclosure relates to, but is not limited to, a field of wireless communication technologies, and more particularly to a physical uplink control channel (PUCCH) transmission method, an apparatus, a communication device, and a storage medium.

**BACKGROUND**

In order to improve cell edge coverage and provide more balanced service quality within a service region, coordinated multiple point transmission is still an important technical means in the new radio (NR) system.

From a perspective of network form, network deployment with a large number of distributed access points combined with centralized baseband processing may be more conducive to providing a balanced user experience rate, and significantly reduce a delay and a signaling overhead caused by handover.

As a frequency band increases, starting from a perspective of ensuring network coverage, relatively dense deployment of access points is also required. In a high-frequency band, there will be a greater tendency to adopt modular active antenna arrays with improvement of integration of active antenna devices. An antenna array of each transmission reception point (TRP) may be divided into several relatively independent antenna panels, therefore, a pattern and a number of ports of the entire array may be flexibly adjusted according to a deployment scenario and a service demand.

Antenna panels or TRPs may also be connected by optical fibers for more flexible distributed deployment.

In a millimeter wave band, as reduction of a wavelength, a blocking effect caused by obstacles such as human bodies or vehicles will become more significant.

In this case, starting from a perspective of ensuring robustness of link connection, transmission/reception may be performed from a plurality of beams at a plurality of angles by using coordination between multiple TRPs or panels, thus reducing a negative impact caused by a blocking effect.

**SUMMARY**

An embodiment of the present disclosure provides a PUCCH transmission method, an apparatus, a communication device, and a storage medium.

According to a first aspect of embodiments of the present disclosure, there is provided a PUCCH transmission method, performed by a terminal. The method includes:
performing, by a plurality of antenna panels of the terminal, a PUCCH transmission according to transmission configuration indications (TCIs), in which different antenna panels correspond to different TCIs.

According to a second aspect of embodiments of the present disclosure, there is provided a PUCCH transmission method, performed by a base station. The method includes:
receiving a PUCCH transmission sent by a plurality of antenna panels of a terminal according to TCIs, in which different antenna panels correspond to different TCIs.

According to a third aspect of embodiments of the present disclosure, there is provided a PUCCH transmission apparatus. The apparatus includes:
a transmission module, configured to perform, by a plurality of antenna panels of the terminal, a PUCCH transmission according to transmission configuration indications (TCIs), in which different antenna panels correspond to different TCIs.

According to a fourth aspect of embodiments of the present disclosure, there is provided a PUCCH transmission apparatus. The apparatus includes:
a receiving module, configured to receive a PUCCH transmission sent by a plurality of antenna panels of a terminal according to TCIs, in which different antenna panels correspond to different TCIs.

According to a fifth aspect of embodiments of the present disclosure, there is provided a communication device including a processor, a transceiver, a memory, and an executable program stored on the memory and capable of being run by the processor. The processor is configured to implement the physical uplink control channel (PUCCH) transmission method as described in the first aspect or the second aspect.

According to a sixth aspect of embodiments of the present disclosure, there is provided a computer storage medium storing an executable program. When the executable program is executed by a processor, the physical uplink control channel (PUCCH) transmission method as described in the first aspect or the second aspect is implemented

According to the technical solution provided by an embodiment of the present disclosure, the antenna panels of the terminal may simultaneously perform the PUCCH transmission according to TCIs corresponding to the antenna panels, thus improving an efficiency of the PUCCH transmission. Different antenna panels correspond to different TCIs, thus it is equivalent to different antenna panels of the terminal having different beam directions, which may ensure transmission quality and reliability.

It is to be understood that both the foregoing general description and the following detailed description are exemplary and explanatory only, and are not restrictive of the disclosure.

**BRIEF DESCRIPTION OF THE DRAWINGS**

The accompanying drawings, which are incorporated in and constitute a part of this specification, illustrate embodiments consistent with the disclosure, and serve to explain the principle of the disclosure together with the description.

FIG 1 is a schematic diagram illustrating a structure of a wireless communication system according to an illustrative embodiment.
FIG 2 is a flowchart illustrating a PUCCH transmission method according to an illustrative embodiment.
FIG 3 is a schematic diagram illustrating a structure of PUCCH transmission according to an illustrative embodiment.
FIG 4a is a schematic diagram illustrating a frequency hopping transmission pattern for sequentially mapping according to an illustrative embodiment.
FIG 4b is a schematic diagram illustrating a frequency hopping transmission pattern for cyclical mapping according to an illustrative embodiment.
FIG 5 is a flowchart illustrating a PUCCH transmission method according to an illustrative embodiment.
FIG 6 is a flowchart illustrating a PUCCH transmission method according to an illustrative embodiment.
FIG 7 is a flowchart illustrating a PUCCH transmission method according to an illustrative embodiment.
FIG 8 is a schematic structural diagram illustrating a PUCCH transmission apparatus according to an illustrative embodiment.
FIG 9 is a schematic structural diagram illustrating a PUCCH transmission apparatus according to an illustrative embodiment.
FIG 10 is a schematic structural diagram illustrating a terminal according to an illustrative embodiment.
FIG 11 is a schematic structural diagram illustrating a communication device according to an illustrative embodiment.

**DETAILED DESCRIPTION**

Illustrative embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following illustrative embodiments do not represent all implementations consistent with the present disclosure. Instead, they are merely examples of apparatuses and methods consistent with some aspects of the disclosure as described in the appended claims.

The terms in embodiments of the present disclosure are only for the purpose of describing specific embodiments, and are not intended to limit embodiments of the present disclosure. The singular forms of "a", "said" and "the" in embodiments of the present disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second and third may be used in embodiments of the present disclosure to describe various information, the information should not be limited to these terms. These terms are only used to distinguish the same type of information from each other. For example, without departing from the scope of the present disclosure, the first information may also be referred to as the second information, and similarly, the second information may also be referred to as the first information. In different contexts, the term "if" used herein is interpreted as "when" or "upon" or "in response to determining".

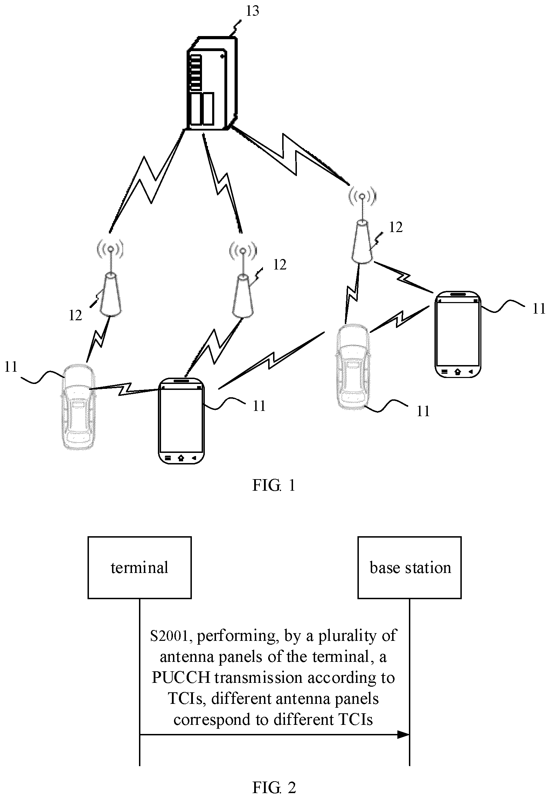

Referring to FIG 1, FIG 1 is a schematic diagram illustrating a structure of a wireless communication system according to an illustrative embodiment. As illustrated in FIG 1, a wireless communication system is a communication system based on cellular mobile communication technologies. The wireless communication system may include several UEs 11 and several access devices 12.

The UE 11 may be a device that provides voice and/or data connectivity to a user. The UE 11 may communicate with one or more core networks through radio access network (RAN). The UE 11 may be an Internet of Things terminal, such as a sensor device, a mobile phone (or "cellular" phone) and a computer with the Internet of Things terminal, such as fixed, portable, pocket, handheld, computer built-in or on-board devices. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the UE 11 may also be an on-board device, for example, a trip computer with a wireless communication function, or a wireless communication device connected to an external trip computer. Alternatively, the UE 11 may also be a roadside device, for example, a street lamp, a signal light or other roadside devices with the wireless communication function.

The access device 12 may be a network side device in the wireless communication system. The wireless communication system may be the 4th generation mobile communication (4G) system, also called as a long-term evolution (LTE) system. Alternatively, the wireless communication system may also be a 5G system, also called as a new radio (NR) system or a 5G NR system. Alternatively, the wireless communication system may also be the next generation system of the 5G system. An access network in the 5G system may be called as NG-RAN (new generation-radio access network), or an MTC system.

The access device 12 may be an evolutionary base station (eNB) used in the 4G system. Alternatively, the access device 12 may also be a base station (gNB) used a centralized distributed architecture in the 5G system. When using the centralized and distributed architecture, the access device 12 generally includes a central unit (CU) and at least two distributed units (DU). The centralized unit is provided with protocol stacks of a packet data convergence protocol (PDCP) layer, a radio link control (RLC) protocol layer and a media access control (MAC) layer. The distribution unit is provided with a protocol stack of a physical (PHY) layer. An embodiment of the present disclosure does not define the specific implementation mode of the access device 12.

A wireless connection may be established between the access device 12 and the UE 11 through a wireless air-interface. In different embodiments, the wireless air-interface is a wireless air-interface based on the 4th generation mobile communication network technology (4G) standard. Alternatively, the wireless air-interface is a wireless air-interface based on the 5th generation mobile communication network technology (5G) standard, for example, the wireless air-interface is a new radio. Alternatively, the wireless air-interface may also be a wireless air-interface based on the next generation mobile communication network technology standard relative to 5G

As shown in FIG 2, an embodiment of the present disclosure provides a PUCCH transmission method, which is performed by a terminal. The method includes a following step.

At step S2001, a PUCCH transmission is performed according to TCIs by a plurality of antenna panels of the terminal, different antenna panels correspond to different TCIs.

In some embodiments, a base station may configure different TCIs for different antenna panels of the terminal.

The terminal may include a plurality of antenna panels. For example, the terminal may include two antenna panels, and directions of the two antenna panels of the terminal may be opposite. One of the antenna panels includes one or more antenna elements.

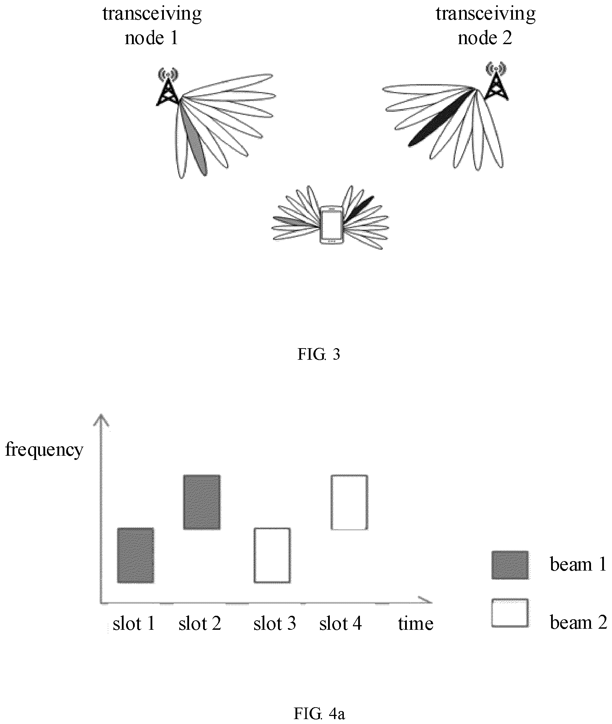

As shown in FIG 3, one terminal has two antenna panels and may send data to TRP1 and TRP2 of the base station simultaneously.

The TCI may be information indicating the beam direction. Different antenna panels have different TCIs (that is, different antenna panels of the terminal are configured with separate TCI states), and the beam directions of transmitting beams of different antenna panels are individually indicated based on their corresponding TCIs. In this way, different antenna panels of the terminal may be used to perform transmission of the PUCCH to different TRPs of the base station.

In some possible implementations, performing, by the plurality of antenna panels of the terminal, the PUCCH transmission according to the TCIs, the different antenna panels corresponding to the different TCIs, may include: performing, by the plurality of antenna panels of the terminal, the PUCCH transmission based on spatial division multiplexing (SDM) according to the TCIs.

The plurality of antenna panels of the terminal may perform the PUCCH transmission using space division multiplexing, that is, the plurality of antenna panels of the terminal may perform the PUCCH transmission using spatially orthogonal channels, which may ensure a transmission quality of the PUCCH transmission of the plurality of antenna panels of the terminal. The plurality of antenna panels perform the transmission simultaneously, which may improve a transmission bandwidth and a transmission efficiency.

The beam directions of the transmitting beams of different antenna panels are individually indicated based on their corresponding TCIs, and adaptive array antennas are adopted to form different beams in different user directions.

In some possible implementations, a PUCCH resource indication field may carry a physical uplink control information resource indicator (PUCCH resource indicator, PRI), and one PRI indicates at least one PUCCH resource.

The TCIs corresponding to different antenna panels may be associated with a same demodulation reference signal (DMRS) port simultaneously.

For example, the terminal has two antenna panels and includes four DMRS ports, then TCI1 and TCI2 respectively corresponding to the two antenna panels are associated with a first DMRS port of the terminal.

In some possible implementations, the different TCIs are associated with a same time-frequency resource.

Since the plurality of antenna panels of the terminal perform the PUCCH transmission using the space division multiplexing, different antenna panels ensure orthogonality of the PUCCH transmission through orthogonality of spatial channels. Therefore, the TCIs corresponding to different antenna panels may be associated with the same time-frequency resource, the time-frequency resource may be saved.

Using SDM multiplexing, same uplink control information (UCI) data is mapped on the same time-frequency resource via different antenna panels/TRPs.

In some possible implementations, the different TCIs are associated with a same PUCCH resource group, and the PUCCH resource group associated with the different TCIs is one group among a plurality of groups of preconfigured PUCCH resources.

For example, the base station may preconfigure one or more groups of PUCCH resources by a network message such as a RRC message, and subsequently when the PUCCH transmission is performed, resources used for this PUCCH transmission may be determined from the pre-configured PUCCH resource group or groups.

For example, a plurality of groups of PUCCH resources may be preconfigured, and one PUCCH resource group may include the plurality of PUCCH resources. An activated or indicated TCI may be associated with all PUCCH resources in one selected PUCCH resource group.

For example, a plurality of sets of TCIs may be preconfigured for the terminal, and one set of TCIs may correspond to the plurality of TCIs for the plurality of antenna panels of the terminal. During this PUCCH transmission, one set of TCIs may be selected to activate or schedule for usage.

In some embodiments, the plurality of the preconfigured sets of TCIs are associated with one PUCCH resource group, and when one set of TCIs is activated or indicated (i.e., scheduled), a PUCCH resource associated with the set of TCIs may be selected for transmission.

In some possible implementations, the different TCIs are associated with different precoder matrices.

Different TCIs are associated with different precoder matrices. Different TCIs may be precoded based on different precoders, and different antenna panels are configured with different TCIs. That is, different antenna panels correspond to different precoders, then each antenna panel uses its own precoder to send the PUCCH.

In some possible implementations, a PUCCH format of the PUCCH transmission is one of:

PUCCH format 0;
PUCCH format 1;
PUCCH format 2;
PUCCH format 3; or
PUCCH format 4.

In order to support transmissions with different UCI bit number ranges, from a perspective of bit number, two types of PUCCH are defined in new radio (NR). One type is a PUCCH format used to carry 1 to 2-bit UCI transmissions, and the other type is a PUCCH format used to carry UCI transmissions greater than 2 bits.

From a perspective of uplink coverage and transmission delay, the NR also defines two types of PUCCH, one is a short PUCCH format, which occupies 1 or 2-symbol transmission, and the other is a long PUCCH format, which occupies 4 to 14-symbol transmission. To sum up, 5 PUCCH formats are defined in the NR, as shown in Table 1 below.

Table 1: PUCCH format definition

| PUCCH format | Symbol length | Number of RB | User multiplexing capacity | Number of bits carried |
|---|---|---|---|---|
| 0 | 1-2 | 1 | 12 | ≤2 |
| 1 | 4-14 | 1 | 12* OCC length | ≤2 |
| 2 | 1-2 | 1, 2, .., 16 integer | 0 | >2 |
| 3 | 4-14 | 1, 2, 3, 4, 5, 6, 8, 9, 10, 12, 15, 16 | 0 | >2 |
| 4 | 4-14 | 1 | 2 or 4 | >2 |

For PUCCH transmission of PUCCH format 1/3/4, the number of repetitions at a slot level may be configured by a RRC signaling nrofSlots, and transmitting may be repeated in a plurality of consecutive slots on the same time-frequency resource. Repeated transmitting is not supported for PUCCH format 0/2. The supported number of repetitions is 1, 2, 4, and 8.

In other words, all PUCCH transmission formats are supported.

In some possible implementations, the PUCCH transmission is a sub-slot-based PUCCH retransmission.

In some possible implementations, one PUCCH retransmission corresponds to one transmission occasion (TO); a number of TOs in one slot is greater than or equal to 2 and less than or equal to 7.

In an embodiment of the present disclosure, one TO may occupy one or more symbols. For example, one TO occupies 2 symbols.

If the number of TOs in one slot is greater than 2 and less than 7, the PUCCH transmission can be performed more than twice in one slot, which may improve an efficiency of the PUCCH transmission compared to performing at most two PUCCH transmissions in one slot.

The number of TOs in one slot supported by a sub-slot-based MP/MTRP transmission, that is, the number of transmissions with a slot, may be expanded.

In some possible implementations, a single TO supports a SDM-based PUCCH transmission for the plurality of antenna panels,

or,

a single TO supports a frequency division multiplexing (FDM)-based PUCCH transmission for the plurality of antenna panels.

In some possible implementations, the PUCCH retransmission may include:

an intra-slot PUCCH retransmission;

or,

an inter-slot PUCCH retransmission.

The intra-slot PUCCH retransmission refers to that there may be two or more identical PUCCH transmissions in one slot.

The inter-slot PUCCH retransmission may refers to that retransmission of the same PUCCH transmission may be implemented on two or more slots.

There are many ways to determine the number of PUCCH retransmissions. An optional method is provided below.

If a number of slots for retransmission (number of slots) is configured, both an intra-slot MP/MTRP transmission and an inter-slot MP/MTRP transmission are supported. The transmission within each slot occupies the same time-frequency domain resource, each slot includes the same number of TOs. A total number of sub-slot-based PUCCH retransmissions is a product of a number of PUCCH retransmissions and a number of transmissions within a slot.

In some possible implementations, the PUCCH transmission includes:

a transmission supporting an intra-slot frequency hopping;

or,

a transmission supporting an inter-slot frequency hopping.

For SDM multiplexing, intra-slot retransmission is supported, and transmission across slots is also supported.

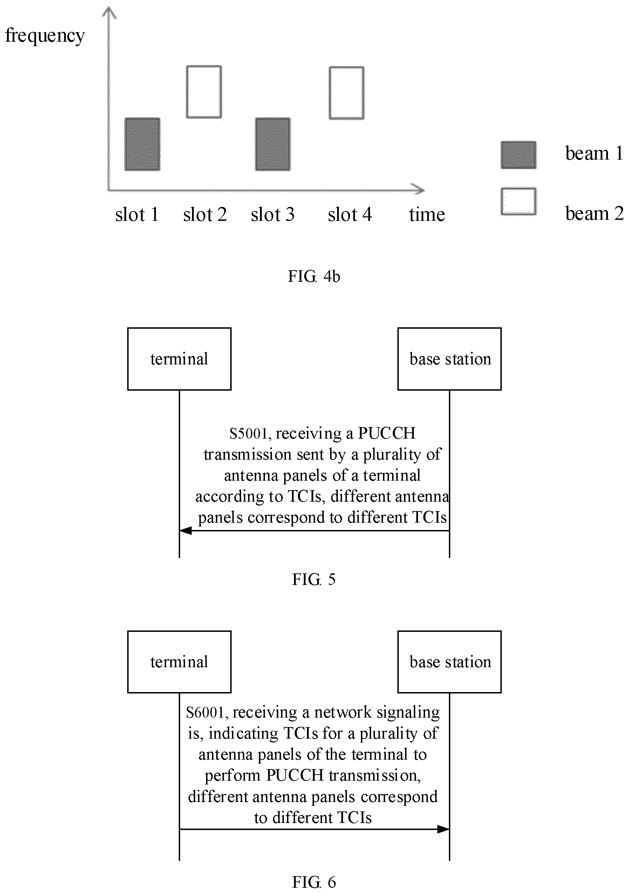

For the inter-slot frequency hopping, in a TDM (time division multiplexing) mode, different frequency hopping transmission patterns correspond to different beam mapping modes for different TRPs. The mapping mode is, for example, sequential mapping as shown in FIG 4a or cyclical mapping as shown in FIG 4b.

The intra-slot frequency hopping may be supported. Symbols in the slot may be divided into a plurality of symbol groups. Each frequency hopping unit in the slot is performed on different symbol groups of the same TO.

If the intra-slot frequency hopping transmission is supported, the plurality of antenna panels of the terminal may perform transmission on carriers with different frequencies within the slot, or two or more transmissions within one slot use the carriers with different frequencies.

It the inter-slot frequency hopping transmission may also be supported, that is, frequency hopping is performed in a unit of slot.

If the inter-slot frequency hopping transmission is adopted, it means that the PUCCH transmission may use a carrier with a different frequency to perform transmission in other slot after one slot ends, thus realizing frequency hopping transmission across slots.

For example, all TOs in a first slot correspond to one frequency, and all TOs in a second slot correspond to a second frequency.

In some possible implementations, a frequency domain resource associated with the TCI remains unchanged within a predetermined time unit.

For example, within each predetermined time unit, an association between TCI1/TCI2 and the corresponding frequency domain resources does not change.

In some possible implementations, the predetermined time unit includes, but is not limited to, one or more TOs.

That is, in each slot, the association between TCI1/TCI2 and the corresponding resources in one or more TOs included in the predetermined time unit does not change.

In some embodiments, the predetermined time unit may also include: sub-slots, slots, half-frames or symbols, etc., which are just examples, and have no limitations to the specific implementation.

In some possible implementations, a frequency domain resource associated with a single TCI changes after one or more TOs;

or,

the frequency domain resource associated with the single TCI changes after one or more slots.

Under FDM multiplexing, an association between TCI1/TCI2 and corresponding frequency domain resources in each slot changes in different time domain TO units.

For example, flipping is performed in a unit of TO. In a first TO, a TCI1 corresponds to a frequency domain resource allocation FDRA1, and a TCI2 corresponds to a frequency domain resource allocation FDRA2. In a second TO, FDRAs corresponding to TCI1 and TCI2 are exchanged respectively, that is, the frequency domain resource allocation corresponding to TCI2 is FDRA1, and the frequency domain resource allocation corresponding to TCI1 is FDRA2.

For example, flipping is performed in a unit of slot. In all TOs of a first slot, a TCI1 corresponds to a frequency domain resource allocation FDRA1, and a TCI2 corresponds to a frequency domain resource allocation FDRA2. In all TOs of a second TO, the frequency domain resource allocation corresponding to TCI2 is FDRA1, and the frequency domain resource allocation corresponding to TCI1 is FDRA2.

In some possible implementations, a total number of retransmissions supported by the PUCCH transmission is Y.

In some possible implementations, Y is less than or equal to 32.

The total number Y of supported retransmissions based on sub-slot under MP/MTRP transmission is extended, for example, Y <= 32.

In a specific implementation process, the number of retransmissions for the PUCCH transmission may be any positive integer less than or equal to Y. For example, the number of retransmissions for the PUCCH transmission is determined based on channel quality. The channel quality is negatively related to the number of retransmissions for the PUCCH transmission.

In some possible implementations, the PUCCH transmission is a PUCCH retransmission across slots.

That is, retransmission in consecutive TOs across slots is allowed.

In some possible implementations, one PUCCH transmission corresponds to one TO.

Since a plurality of PUCCH transmissions support the inter-slot frequency hopping transmission and the intra-slot frequency hopping transmission, the Y PUCCH retransmissions at this time have the following two configurations.

in a case that Y PUCCH retransmissions are distributed in different slots, the PUCCCH transmission is a frequency hopping transmission in a unit of slot;

or,

in a case that the Y PUCCH retransmissions are distributed in different slots, the PUCCH transmission is a frequency hopping transmission in a unit of TO.

In a specific process of PUCCH configuration, the number of PUCCH retransmissions and/or whether to configure frequency hopping transmission can be configured based on channel quality between multiple antenna panels of the terminal and the TRPs. If the frequency hopping transmission is configured, it can also be determined whether the frequency hopping transmission is the intra-slot frequency hopping transmission or the inter-slot frequency hopping transmission based on the above channel quality.

The frequency hopping transmission may improve a frequency domain gain, thus, when the channel quality is poor, it may consider configuring frequency hopping transmission for the PUCCH. Furthermore, the intra-slot frequency hopping transmission or the inter-slot frequency hopping transmission for the PUCCH transmission may be determined according to a resource scheduling situation.

The frequency hopping transmission in a unit of slot refers to that different TOs within a slot use the same frequency to send.

The frequency hopping transmission in a unit of TO refers to that, regardless of the slot frequency hopping configuration, frequency hopping is performed based on all TOs, that is, a first TO uses a first frequency point to send, and a second TO uses a second frequency point to send, alternating between them.

As shown in FIG 5, an embodiment of the present disclosure provides a PUCCH transmission method, which is performed by a terminal. The method includes a following step.

At step S5001, a PUCCH transmission sent by a plurality of antenna panels of a terminal according to TCIs is received, different antenna panels correspond to different TCIs.

In some embodiments, a base station may configure different TCIs for different antenna panels of the terminal.

The terminal may include a plurality of antenna panels. For example, the terminal may include two antenna panels, and directions of the two antenna panels of the terminal may be opposite. One of the antenna panels includes one or more antenna elements.

For example, one terminal has two antenna panels and may send data to TRP1 and TRP2 of the base station simultaneously.

The TCI may be information indicating the beam direction. Different antenna panels have different TCIs (that is, different antenna panels of the terminal are configured with separate TCI states), and the beam directions of transmitting beams of different antenna panels are individually indicated based on their corresponding TCIs. In this way, different antenna panels of the terminal may be used to perform transmission of the PUCCH to different TRPs of the base station.

In some possible implementations, the step S2110 of receiving the PUCCH transmission sent by the plurality of antenna panels of the terminal according to the TCIs includes:

receiving the PUCCH transmission sent by the plurality of antenna panels of the terminal using a SDM according to the TCIs.

The plurality of antenna panels of the terminal may perform the PUCCH transmission using the SDM, that is, the plurality of antenna panels of the terminal may perform the PUCCH transmission using spatially orthogonal channels, which may ensure a transmission quality of the PUCCH transmission of the plurality of antenna panels of the terminal. The plurality of antenna panels perform the transmission simultaneously, which may improve a transmission bandwidth and a transmission efficiency.

The beam directions of the transmitting beams of different antenna panels are individually indicated based on their corresponding TCIs, and adaptive array antennas are adopted to form different beams in different user directions.

In some possible implementations, a PUCCH resource indication field may carry a PRI, and one PRI indicates at least one PUCCH resource.

The TCIs corresponding to different antenna panels may be associated with a same DMRS port simultaneously.

For example, the terminal has two antenna panels and includes four DMRS ports, then TCI1 and TCI2 respectively corresponding to the two antenna panels are associated with a first DMRS port of the terminal.

In some possible implementations, the different TCIs are associated with a same time-frequency resource.

Since the plurality of antenna panels of the terminal perform the PUCCH transmission using the space division multiplexing, different antenna panels ensure orthogonality of the PUCCH transmission through orthogonality of spatial channels. Therefore, the TCIs corresponding to different antenna panels may be associated with the same time-frequency resource, the time-frequency resource may be saved.

Using SDM multiplexing, same UCI data is mapped on the same time-frequency resource via different antenna panels/TRPs.

In some possible implementations, the different TCIs are associated with a same PUCCH resource group, and the PUCCH resource group associated with the different TCIs is one group among a plurality of groups of preconfigured PUCCH resources.

For example, the base station may preconfigure one or more groups of PUCCH resources by a network message such as a RRC message, and subsequently when the PUCCH transmission is performed, resources used for this PUCCH transmission may be determined from the pre-configured PUCCH resource group or groups.

For example, a plurality of groups of PUCCH resources may be preconfigured, and one PUCCH resource group may include the plurality of PUCCH resources. An activated or indicated TCI may be associated with all PUCCH resources in one selected PUCCH resource group.

For example, a plurality of sets of TCIs may be preconfigured for the terminal, and one set of TCIs may correspond to the plurality of TCIs for the plurality of antenna panels of the terminal. During this PUCCH transmission, one set of TCIs may be selected to activate or schedule for usage.

In some embodiments, the plurality of the preconfigured sets of TCIs are associated with one PUCCH resource group, and when one set of TCIs is activated or indicated (i.e., scheduled), a PUCCH resource associated with the set of TCIs may be selected for transmission.

In some possible implementations, the different TCIs are associated with different precoder matrices.

Different TCIs are associated with different precoder matrices. Different TCIs may be precoded based on different precoders, and different antenna panels are configured with different TCIs. That is, different antenna panels correspond to different precoders, then each antenna panel uses its own precoder to send the PUCCH.

In some possible implementations, a PUCCH format of the PUCCH transmission is one of:

PUCCH format 0;
PUCCH format 1;
PUCCH format 2;
PUCCH format 3; or
PUCCH format 4.

In order to support transmissions with different UCI bit number ranges, from a perspective of bit number, two types of PUCCH are defined in new radio (NR). One type is a PUCCH format used to carry 1 to 2-bit UCI transmissions, and the other type is a PUCCH format used to carry UCI transmissions greater than 2 bits.

For PUCCH transmission of PUCCH format 1/3/4, the number of repetitions at a slot level may be configured by a RRC signaling nrofSlots, and transmitting may be repeated in a plurality of consecutive slots on the same time-frequency resource. Repeated transmitting is not supported for PUCCH format 0/2. The supported number of repetitions is 1, 2, 4, and 8.

In other words, all PUCCH transmission formats are supported.

In some possible implementations, the PUCCH transmission is a sub-slot-based PUCCH retransmission.

In some possible implementations, one PUCCH retransmission corresponds to one TO; a number of TOs in one slot is greater than or equal to 2 and less than or equal to 7.

In an embodiment of the present disclosure, one TO may occupy one or more symbols. For example, one TO occupies 2 symbols.

If the number of TOs in one slot is greater than 2 and less than 7, the PUCCH transmission can be performed more than twice in one slot, which may improve an efficiency of the PUCCH transmission compared to performing at most two PUCCH transmissions in one slot.

The number of TOs in one slot supported by sub-slot-based MP/MTRP transmission, that is, the number of transmissions within a slot, may be expanded.

In some possible implementations, a single TO supports a SDM-based PUCCH transmission for the plurality of antenna panels,

or,

a single TO supports a FDM-based PUCCH transmission for the plurality of antenna panels:

The intra-slot PUCCH retransmission refers to that there may be two or more identical PUCCH transmissions in one slot.

The inter-slot PUCCH retransmission may refers to that retransmission of the same PUCCH transmission may be implemented on two or more slots.

There are many ways to determine the number of PUCCH retransmissions. An optional method is provided below.

If a number of slots for retransmission (number of slots) is configured, both an intra-slot MP/MTRP transmission and an inter-slot MP/MTRP transmission are supported. The transmission within each slot occupies the same time-frequency domain resource, each slot includes the same number of TOs. A total number of sub-slot- based PUCCH retransmissions is a product of a number of PUCCH retransmissions and a number of transmissions within a slot.

In some possible implementations, the PUCCH retransmission may include:

an intra-slot PUCCH retransmission;
or,
an inter-slot PUCCH retransmission.

For SDM multiplexing, intra-slot retransmission is supported, and transmission across slots is also supported.

The intra-slot frequency hopping may be supported. Symbols in the slot may be divided into a plurality of symbol groups. Each frequency hopping unit in the slot is performed on different symbol groups of the same TO.

If the intra-slot frequency hopping transmission is supported, the plurality of antenna panels of the terminal may perform transmission on carriers with different frequencies within the slot, or two or more transmissions within one slot use the carriers with different frequencies.

It the inter-slot frequency hopping transmission may also be supported, that is, frequency hopping is performed in a unit of slot.

If the inter-slot frequency hopping transmission is adopted, it means that the PUCCH transmission may use a carrier with a different frequency to perform transmission in other slot after one slot ends, thus realizing frequency hopping transmission across slots.

For example, all TOs in a first slot correspond to one frequency, and all TOs in a second slot correspond to a second frequency.

In some possible implementations, a total number of sub-slot-based PUCCH retransmissions is a product of a number of PUCCH retransmissions and a number of transmissions within a slot.

In some possible implementations, a frequency domain resource associated with the TCI remains unchanged within a predetermined time unit.

For example, within each predetermined time unit, an association between TCI1/TCI2 and the corresponding frequency domain resources does not change.

In some possible implementations, the predetermined time unit includes, but is not limited to, one or more TOs.

That is, in each slot, the association between TCI1/TCI2 and the corresponding resources in one or more TOs included in the predetermined time unit does not change.

In some embodiments, the predetermined time unit may also include: sub-slots, slots, half-frames or symbols, etc., which are just examples, and have no limitations to the specific implementation.

In some possible implementations, a frequency domain resource associated with a single TCI changes after one or more TOs;
or,

the frequency domain resource associated with the single TCI changes after one or more slots.

Under FDM multiplexing, an association between TCI1/TCI2 and corresponding frequency domain resources in each slot changes in different time domain TO units.

For example, flipping is performed in a unit of TO. In a first TO, a TCI1 corresponds to a frequency domain resource allocation FDRA1, and a TCI2 corresponds to a frequency domain resource allocation FDRA2. In a second TO, FDRAs corresponding to TCI1 and TCI2 are exchanged respectively, that is, the frequency domain resource allocation corresponding to TCI2 is FDRA1, and the frequency domain resource allocation corresponding to TCI1 is FDRA2.

For example, flipping is performed in a unit of slot. In all TOs of a first slot, a TCI1 corresponds to a frequency domain resource allocation FDRA1, and a TCI2 corresponds to a frequency domain resource allocation FDRA2. In all TOs of a second TO, the frequency domain resource allocation corresponding to TCI2 is FDRA1, and the frequency domain resource allocation corresponding to TCI1 is FDRA2.

In some possible implementations, a total number of retransmissions supported by the PUCCH transmission is Y.

In some possible implementations, Y is less than or equal to 32.

The total number Y of supported retransmissions based on sub-slot under MP/MTRP transmission is extended, for example, Y <= 32.

In a specific implementation process, the number of retransmissions for the PUCCH transmission may be any positive integer less than or equal to Y. For example, the number of retransmissions for the PUCCH transmission is determined based on channel quality. The channel quality is negatively related to the number of retransmissions for the PUCCH transmission.

In some possible implementations, the PUCCH transmission is a PUCCH retransmission across slots.

That is, retransmission in consecutive TOs across slots is allowed.

In some possible implementations, one PUCCH transmission corresponds to one TO.

Since a plurality of PUCCH transmissions support the inter-slot frequency hopping transmission and the intra-slot frequency hopping transmission, the Y PUCCH retransmissions at this time have the following two configurations.

in a case that Y PUCCH retransmissions are distributed in different slots, the PUCCCH transmission is a frequency hopping transmission in a unit of slot;

or,

in a case that the Y PUCCH retransmissions are distributed in different slots, the PUCCH transmission is a frequency hopping transmission in a unit of TO.

In a specific process of PUCCH configuration, the number of PUCCH retransmissions and/or whether to configure frequency hopping transmission can be configured based on channel quality between multiple antenna panels of the terminal and the TRPs. If the frequency hopping transmission is configured, it can also be determined whether the frequency hopping transmission is the intra-slot frequency hopping transmission or the inter-slot frequency hopping transmission based on the above channel quality.

The frequency hopping transmission may improve a frequency domain gain, thus, when the channel quality is poor, it may consider configuring frequency hopping transmission for the PUCCH. Furthermore, the intra-slot frequency hopping transmission or the inter-slot frequency hopping transmission for the PUCCH transmission may be determined according to a resource scheduling situation.

The frequency hopping transmission in a unit of slot refers to that different TOs within a slot use the same frequency to send.

The frequency hopping transmission in a unit of TO refers to that, regardless of the slot frequency hopping configuration, frequency hopping is performed based on all TOs, that is, a first TO uses a first frequency point to send, and a second TO uses a second frequency point to send, alternating between them.

As shown in FIG 6, an embodiment of the present disclosure provides a PUCCH transmission method, which is performed by a terminal. The method includes a following step.

At step S6001, a network signaling is received. The network signaling indicates TCIs for a plurality of antenna panels of the terminal to perform PUCCH transmission, different antenna panels correspond to different TCIs.

In some embodiments, a base station may configure different TCIs for different antenna panels of the terminal.

The terminal may include a plurality of antenna panels. For example, the terminal may include two antenna panels, and directions of the two antenna panels of the terminal may be opposite. One of the antenna panels includes one or more antenna elements.

For example, one terminal has two antenna panels and may send data to TRP1 and TRP2 of the base station simultaneously.

The TCI may be information indicating the beam direction. Different antenna panels have different TCIs (that is, different antenna panels of the terminal are configured with separate TCI states), and the beam directions of transmitting beams of different antenna panels are individually indicated based on their corresponding TCIs. In this way, different antenna panels of the terminal may be used to perform transmission of the PUCCH to different TRPs of the base station.

In some possible implementations, the network signaling indicating the TCIs for the plurality of antenna panels of the terminal to perform the PUCCH transmission, different antenna panels corresponding different TCIs, includes: performing, by the plurality of antenna panels of the terminal, the PUCCH transmission based on spatial division multiplexing (SDM) according to the TCIs indicated by the network signaling.

The plurality of antenna panels of the terminal may perform the PUCCH transmission using the SDM, that is, the plurality of antenna panels of the terminal may perform the PUCCH transmission using spatially orthogonal channels, which may ensure a transmission quality of the PUCCH transmission of the plurality of antenna panels of the terminal. The plurality of antenna panels perform the transmission simultaneously, which may improve a transmission bandwidth and a transmission efficiency.

The beam directions of the transmitting beams of different antenna panels are individually indicated based on their corresponding TCIs, and adaptive array antennas are adopted to form different beams in different user directions.

In some possible implementations, a PUCCH resource indication field may carry a PRI, and one PRI indicates at least one PUCCH resource.

The TCIs corresponding to different antenna panels may be associated with a same DMRS port simultaneously.

For example, the terminal has two antenna panels and includes four DMRS ports, then TCI1 and TCI2 respectively corresponding to the two antenna panels are associated with a first DMRS port of the terminal.

In some possible implementations, the different TCIs are associated with a same time-frequency resource.

Since the plurality of antenna panels of the terminal perform the PUCCH transmission using the space division multiplexing, different antenna panels ensure orthogonality of the PUCCH transmission through orthogonality of spatial channels. Therefore, the TCIs corresponding to different antenna panels may be associated with the same time-frequency resource, the time-frequency resource may be saved.

Using SDM multiplexing, same UCI data is mapped on the same time-frequency resource via different antenna panels/TRPs.

In some possible implementations, the different TCIs are associated with a same PUCCH resource group, and the PUCCH resource group associated with the different TCIs is one group among a plurality of groups of preconfigured PUCCH resources.

For example, the base station may preconfigure one or more groups of PUCCH resources by a network message such as a RRC message, and subsequently when the PUCCH transmission is performed, resources used for this PUCCH transmission may be determined from the pre-configured PUCCH resource group or groups.

For example, a plurality of groups of PUCCH resources may be preconfigured, and one PUCCH resource group may include the plurality of PUCCH resources. An activated or indicated TCI may be associated with all PUCCH resources in one selected PUCCH resource group.

For example, a plurality of sets of TCIs may be preconfigured for the terminal, and one set of TCIs may correspond to the plurality of TCIs for the plurality of antenna panels of the terminal. During this PUCCH transmission, one set of TCIs may be selected to activate or schedule for usage.

In some embodiments, the plurality of the preconfigured sets of TCIs are associated with one PUCCH resource group, and when one set of TCIs is activated or indicated (i.e., scheduled), a PUCCH resource associated with the set of TCIs may be selected for transmission.

In some possible implementations, the different TCIs are associated with different precoder matrices.

Different TCIs are associated with different precoder matrices. Different TCIs may be precoded based on different precoders, and different antenna panels are configured with different TCIs. That is, different antenna panels correspond to different precoders, then each antenna panel uses its own precoder to send the PUCCH.

In some possible implementations, a PUCCH format of the PUCCH transmission is one of:

> PUCCH format 0;
> PUCCH format 1;
> PUCCH format 2;
> PUCCH format 3; or
> PUCCH format 4.

In order to support transmissions with different UCI bit number ranges, from a perspective of bit number, two types of PUCCH are defined in new radio (NR). One type is a PUCCH format used to carry 1 to 2-bit UCI transmissions, and the other type is a PUCCH format used to carry UCI transmissions greater than 2 bits.

For PUCCH transmission of PUCCH format 1/3/4, the number of repetitions at a slot level may be configured by a RRC signaling nrofSlots, and transmitting may be repeated in a plurality of consecutive slots on the same time-frequency resource. Repeated transmitting is not supported for PUCCH format 0/2. The supported number of repetitions is 1, 2, 4, and 8.

In other words, all PUCCH transmission formats are supported.

In some possible implementations, the PUCCH transmission is a sub-slot-based PUCCH retransmission.

In some possible implementations, one PUCCH retransmission corresponds to one TO; a number of TOs in one slot is greater than or equal to 2 and less than or equal to 7.

In an embodiment of the present disclosure, one TO may occupy one or more symbols. For example, one TO occupies 2 symbols.

If the number of TOs in one slot is greater than 2 and less than 7, the PUCCH transmission can be performed more than twice in one slot, which may improve an efficiency of the PUCCH transmission compared to performing at most two PUCCH transmissions in one slot.

The number of TOs in one slot supported by the sub-slot-based MP/MTRP transmission, that is, the number of transmissions within a slot, may be expanded.

In some possible implementations, a single TO supports a SDM-based PUCCH transmission for the plurality of antenna panels,

or,

a single TO supports a FDM-based PUCCH transmission for the plurality of antenna panels.

The intra-slot PUCCH retransmission refers to that there may be two or more identical PUCCH transmissions in one slot.

The inter-slot PUCCH retransmission may refers to that retransmission of the same PUCCH transmission may be implemented on two or more slots.

There are many ways to determine the number of PUCCH retransmissions. An optional method is provided below.

If a number of slots for retransmission (number of slots) is configured, both an intra-slot MP/MTRP transmission and an inter-slot MP/MTRP transmission are supported. The transmission within each slot occupies the same time-frequency domain resource, each slot includes the same number of TOs. A total number of sub-slot-based PUCCH retransmissions is a product of a number of PUCCH retransmissions and a number of transmissions within a slot.

In some possible implementations, the PUCCH retransmission may include:

an intra-slot PUCCH retransmission;
or,
an inter-slot PUCCH retransmission.

For SDM multiplexing, intra-slot retransmission is supported, and transmission across slots is also supported.

The intra-slot frequency hopping may be supported. Symbols in the slot may be divided into a plurality of symbol groups. Each frequency hopping unit in the slot is performed on different symbol groups of the same TO.

If the intra-slot frequency hopping transmission is supported, the plurality of antenna panels of the terminal may perform transmission on carriers with different frequencies within the slot, or two or more transmissions within one slot use the carriers with different frequencies.

It the inter-slot frequency hopping transmission may also be supported, that is, frequency hopping is performed in a unit of slot.

If the inter-slot frequency hopping transmission is adopted, it means that the PUCCH transmission may use a carrier with a different frequency to perform transmission in other slot after one slot ends, thus realizing frequency hopping transmission across slots.

For example, all TOs in a first slot correspond to one frequency, and all TOs in a second slot correspond to a second frequency.

In some possible implementations, a total number of sub-slot-based PUCCH retransmissions is a product of a number of PUCCH retransmissions and a number of transmissions within a slot.

In some possible implementations, a frequency domain resource associated with the TCI remains unchanged within a predetermined time unit.

For example, within each predetermined time unit, an association between TCI1/TCI2 and the corresponding frequency domain resources does not change.

In some possible implementations, the predetermined time unit includes, but is not limited to, one or more TOs.

That is, in each slot, the association between TCI1/TCI2 and the corresponding resources in one or more TOs included in the predetermined time unit does not change.

In some embodiments, the predetermined time unit may also include: sub-slots, slots, half-frames or symbols, etc., which are just examples, and have no limitations to the specific implementation.

In some possible implementations, a frequency domain resource associated with a single TCI changes after one or more TOs;

or,

the frequency domain resource associated with the single TCI changes after one or more slots.

Under FDM multiplexing, an association between TCI1/TCI2 and corresponding frequency domain resources in each slot changes in different time domain TO units.

For example, flipping is performed in a unit of TO. In a first TO, a TCI1 corresponds to a frequency domain resource allocation FDRA1, and a TCI2 corresponds to a frequency domain resource allocation FDRA2. In a second TO, FDRAs corresponding to TCI1 and TCI2 are exchanged respectively, that is, the frequency domain resource allocation corresponding to TCI2 is FDRA1, and the frequency domain resource allocation corresponding to TCI1 is FDRA2.

For example, flipping is performed in a unit of slot. In all TOs of a first slot, a TCI1 corresponds to a frequency domain resource allocation FDRA1, and a TCI2 corresponds to a frequency domain resource allocation FDRA2. In all TOs of a second TO, the frequency domain resource allocation corresponding to TCI2 is FDRA1, and the frequency domain resource allocation corresponding to TCI1 is FDRA2.

In some possible implementations, a total number of retransmissions supported by the PUCCH transmission is Y.

In some possible implementations, Y is less than or equal to 32.

The total number Y of supported retransmissions based on sub-slot under MP/MTRP transmission is extended, for example, Y <= 32.

In a specific implementation process, the number of retransmissions for the PUCCH transmission may be any positive integer less than or equal to Y. For example, the number of retransmissions for the PUCCH transmission is determined based on channel quality. The channel quality is negatively related to the number of retransmissions for the PUCCH transmission.

In some possible implementations, the PUCCH transmission is a PUCCH retransmission across slots.

That is, retransmission in consecutive TOs across slots is allowed.

In some possible implementations, one PUCCH transmission corresponds to one TO.

Since a plurality of PUCCH transmissions support the inter-slot frequency hopping transmission and the intra-slot frequency hopping transmission, the Y PUCCH retransmissions at this time have the following two configurations.

in a case that Y PUCCH retransmissions are distributed in different slots, the PUCCCH transmission is a frequency hopping transmission in a unit of slot;
or,
in a case that the Y PUCCH retransmissions are distributed in different slots, the PUCCH transmission is a frequency hopping transmission in a unit of TO.

In a specific process of PUCCH configuration, the number of PUCCH retransmissions and/or whether to configure frequency hopping transmission can be configured based on channel quality between multiple antenna panels of the terminal and the TRPs. If the frequency hopping transmission is configured, it can also be determined whether the frequency hopping transmission is the intra-slot frequency hopping transmission or the inter-slot frequency hopping transmission based on the above channel quality.

The frequency hopping transmission may improve a frequency domain gain, thus, when the channel quality is poor, it may consider configuring frequency hopping transmission for the PUCCH. Furthermore, the intra-slot frequency hopping transmission or the inter-slot frequency hopping transmission for the PUCCH transmission may be determined according to a resource scheduling situation.

The frequency hopping transmission in a unit of slot refers to that different TOs within a slot use the same frequency to send.

The frequency hopping transmission in a unit of TO refers to that, regardless of the slot frequency hopping configuration, frequency hopping is performed based on all TOs, that is, a first TO uses a first frequency point to send, and a second TO uses a second frequency point to send, alternating between them.

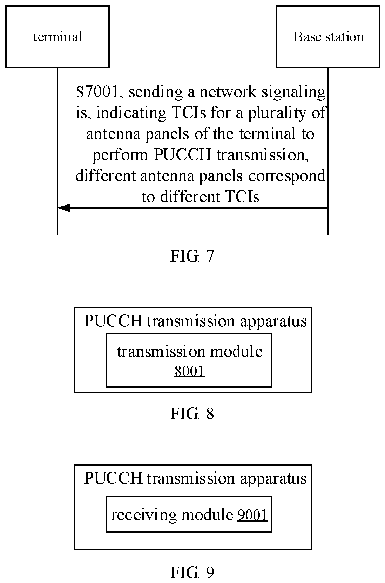

As shown in FIG 7, an embodiment of the present disclosure provides a PUCCH transmission method, which is performed by a base station. The method includes a following step.

At step S7001, a network signaling is sent. The network signaling indicates TCIs for a plurality of antenna panels of the terminal to perform PUCCH transmission, different antenna panels correspond to different TCIs.

In some possible implementations, the network signaling indicating the TCIs for the plurality of antenna panels of the terminal to perform the PUCCH transmission, different antenna panels corresponding different TCIs, includes:

performing, by the plurality of antenna panels of the terminal, the PUCCH transmission based on spatial division multiplexing (SDM) according to the TCIs indicated by the network signaling.

The plurality of antenna panels of the terminal may perform the PUCCH transmission using the SDM, that is, the plurality of antenna panels of the terminal may perform the PUCCH transmission using spatially orthogonal channels, which may ensure a transmission quality of the PUCCH transmission of the plurality of antenna panels of the terminal. The plurality of antenna panels perform the transmission simultaneously, which may improve a transmission bandwidth and a transmission efficiency.

The beam directions of the transmitting beams of different antenna panels are individually indicated based on their corresponding TCIs, and adaptive array antennas are adopted to form different beams in different user directions.

In some possible implementations, a PUCCH resource indication field may carry a PRI, and one PRI indicates at least one PUCCH resource.

The TCIs corresponding to different antenna panels may be associated with a same DMRS port simultaneously.

For example, the terminal has two antenna panels and includes four DMRS ports, then TCI1 and TCI2 respectively corresponding to the two antenna panels are associated with a first DMRS port of the terminal.

In some possible implementations, the different TCIs are associated with a same time-frequency resource.

Since the plurality of antenna panels of the terminal perform the PUCCH transmission using the space division multiplexing, different antenna panels ensure orthogonality of the PUCCH transmission through orthogonality of spatial channels. Therefore, the TCIs corresponding to different antenna panels may be associated with the same time-frequency resource, the time-frequency resource may be saved.

Using SDM multiplexing, same UCI data is mapped on the same time-frequency resource via different antenna panels/TRPs.

In some possible implementations, the different TCIs are associated with a same PUCCH resource group, and the PUCCH resource group associated with the different TCIs is one group among a plurality of groups of preconfigured PUCCH resources.

For example, the base station may preconfigure one or more groups of PUCCH resources by a network message such as a RRC message, and subsequently when the PUCCH transmission is performed, resources used for this PUCCH transmission may be determined from the pre-configured PUCCH resource group or groups.

For example, a plurality of groups of PUCCH resources may be preconfigured, and one PUCCH resource group may include the plurality of PUCCH resources. An activated or indicated TCI may be associated with all PUCCH resources in one selected PUCCH resource group.

For example, a plurality of sets of TCIs may be preconfigured for the terminal, and one set of TCIs may correspond to the plurality of TCIs for the plurality of antenna panels of the terminal. During this PUCCH transmission, one set of TCIs may be selected to activate or schedule for usage.

In some embodiments, the plurality of the preconfigured sets of TCIs are associated with one PUCCH resource group, and when one set of TCIs is activated or indicated (i.e., scheduled), a PUCCH resource associated with the set of TCIs may be selected for transmission.

In some possible implementations, the different TCIs are associated with different precoder matrices.

Different TCIs are associated with different precoder matrices. Different TCIs may be precoded based on different precoders, and different antenna panels are configured with different TCIs. That is, different antenna panels correspond to different precoders, then each antenna panel uses its own precoder to send the PUCCH.

In some possible implementations, a PUCCH format of the PUCCH transmission is one of:

PUCCH format 0;
PUCCH format 1;
PUCCH format 2;
PUCCH format 3; or
PUCCH format 4.

For PUCCH transmission of PUCCH format 1/3/4, the number of repetitions at a slot level may be configured by a RRC signaling nrofSlots, and transmitting may be repeated in a plurality of consecutive slots on the same time-frequency resource. Repeated transmitting is not supported for PUCCH format 0/2. The supported number of repetitions is 1, 2, 4, and 8.

In other words, all PUCCH transmission formats are supported.

In some possible implementations, the PUCCH transmission is a sub-slot-based PUCCH retransmission.

In some possible implementations, one PUCCH retransmission corresponds to one TO; a number of TOs in one slot is greater than or equal to 2 and less than or equal to 7.

In an embodiment of the present disclosure, one TO may occupy one or more symbols. For example, one TO occupies 2 symbols.

If the number of TOs in one slot is greater than 2 and less than 7, the PUCCH transmission can be performed more than twice in one slot, which may improve an efficiency of the PUCCH transmission compared to performing at most two PUCCH transmissions in one slot.

The number of TOs in one slot supported by s sub-slot-based MP/MTRP transmission, that is, the number of transmissions within a slot, may be expanded.

In some possible implementations, a single TO supports a SDM-based PUCCH transmission for the plurality of antenna panels,
or,
a single TO supports a FDM-based PUCCH transmission for the plurality of antenna panels.

The intra-slot PUCCH retransmission refers to that there may be two or more identical PUCCH transmissions in one slot.

The inter-slot PUCCH retransmission may refers to that retransmission of the same PUCCH transmission may be implemented on two or more slots.

There are many ways to determine the number of PUCCH retransmissions. An optional method is provided below.

If a number of slots for retransmission (number of slots) is configured, both an intra-slot MP/MTRP transmission and an inter-slot MP/MTRP transmission are supported. The transmission within each slot occupies the same time-frequency domain resource, each slot includes the same number of TOs. A total number of sub-slot-based PUCCH retransmissions is a product of a number of PUCCH retransmissions and a number of transmissions within a slot.

In some possible implementations, the PUCCH retransmission may include:

an intra-slot PUCCH retransmission;

or,

an inter-slot PUCCH retransmission.

For SDM multiplexing, intra-slot retransmission is supported, and transmission across slots is also supported.

The intra-slot frequency hopping may be supported. Symbols in the slot may be divided into a plurality of symbol groups. Each frequency hopping unit in the slot is performed on different symbol groups of the same TO.

If the intra-slot frequency hopping transmission is supported, the plurality of antenna panels of the terminal may perform transmission on carriers with different frequencies within the slot, or two or more transmissions within one slot use the carriers with different frequencies.

It the inter-slot frequency hopping transmission may also be supported, that is, frequency hopping is performed in a unit of slot.

If the inter-slot frequency hopping transmission is adopted, it means that the PUCCH transmission may use a carrier with a different frequency to perform transmission in other slot after one slot ends, thus realizing frequency hopping transmission across slots.

For example, all TOs in a first slot correspond to one frequency, and all TOs in a second slot correspond to a second frequency.

In some possible implementations, a total number of sub-slot-based PUCCH retransmissions is a product of a number of PUCCH retransmissions and a number of transmissions within a slot.

In some possible implementations, a frequency domain resource associated with the TCI remains unchanged within a predetermined time unit.

For example, within each predetermined time unit, an association between TCI1/TCI2 and the corresponding frequency domain resources does not change.

In some possible implementations, the predetermined time unit includes, but is not limited to, one or more TOs.

That is, in each slot, the association between TCI1/TCI2 and the corresponding resources in one or more TOs included in the predetermined time unit does not change.

In some embodiments, the predetermined time unit may also include: sub-slots, slots, half-frames or symbols, etc., which are just examples, and have no limitations to the specific implementation.

In some possible implementations, a frequency domain resource associated with a single TCI changes after one or more TOs;

or,

the frequency domain resource associated with the single TCI changes after one or more slots.

Under FDM multiplexing, an association between TCI1/TCI2 and corresponding frequency domain resources in each slot changes in different time domain TO units.

For example, flipping is performed in a unit of TO. In a first TO, a TCI1 corresponds to a frequency domain resource allocation FDRA1, and a TCI2 corresponds to a frequency domain resource allocation FDRA2. In a second TO, FDRAs corresponding to TCI1 and TCI2 are exchanged respectively, that is, the frequency domain resource allocation corresponding to TCI2 is FDRA1, and the frequency domain resource allocation corresponding to TCI1 is FDRA2.

For example, flipping is performed in a unit of slot. In all TOs of a first slot, a TCI1 corresponds to a frequency domain resource allocation FDRA1, and a TCI2 corresponds to a frequency domain resource allocation FDRA2. In all TOs of a second TO, the frequency domain resource allocation corresponding to TCI2 is FDRA1, and the frequency domain resource allocation corresponding to TCI1 is FDRA2.

In some possible implementations, a total number of retransmissions supported by the PUCCH transmission is Y.

In some possible implementations, Y is less than or equal to 32.

The total number Y of supported retransmissions based on sub-slot under MP/MTRP transmission is extended, for example, Y <= 32.

In a specific implementation process, the number of retransmissions for the PUCCH transmission may be any positive integer less than or equal to Y. For example, the number of retransmissions for the PUCCH transmission is determined based on channel quality. The channel quality is negatively related to the number of retransmissions for the PUCCH transmission.

In some possible implementations, the PUCCH transmission is a PUCCH retransmission across slots.

That is, retransmission in consecutive TOs across slots is allowed.

In some possible implementations, one PUCCH transmission corresponds to one TO.

Since a plurality of PUCCH transmissions support the inter-slot frequency hopping transmission and the intra-slot frequency hopping transmission, the Y PUCCH retransmissions at this time have the following two configurations.

in a case that Y PUCCH retransmissions are distributed in different slots, the PUCCCH transmission is a frequency hopping transmission in a unit of slot;
or,
in a case that the Y PUCCH retransmissions are distributed in different slots, the PUCCH transmission is a frequency hopping transmission in a unit of TO.

In a specific process of PUCCH configuration, the number of PUCCH retransmissions and/or whether to configure frequency hopping transmission can be configured based on channel quality between multiple antenna panels of the terminal and the TRPs. If the frequency hopping transmission is configured, it can also be determined whether the frequency hopping transmission is the intra-slot frequency hopping transmission or the inter-slot frequency hopping transmission based on the above channel quality.

The frequency hopping transmission may improve a frequency domain gain, thus, when the channel quality is poor, it may consider configuring frequency hopping transmission for the PUCCH. Furthermore, the intra-slot frequency hopping transmission or the inter-slot frequency hopping transmission for the PUCCH transmission may be determined according to a resource scheduling situation.

The frequency hopping transmission in a unit of slot refers to that different TOs within a slot use the same frequency to send.

The frequency hopping transmission in a unit of TO refers to that, regardless of the slot frequency hopping configuration, frequency hopping is performed based on all TOs, that is, a first TO uses a first frequency point to send, and a second TO uses a second frequency point to send, alternating between them.

It may consider configuring, based on a unified TCI framework, to a terminal, state values of N TCIs applicable for simultaneous transmission.

If MP/MTRP beam consistency is satisfied, TCIs of different panels of the terminal may be indicated by N different joint TCIs.

If the MP/MTRP beam consistency is not satisfied, TCI of each antenna panel during PUSCH transmission of the terminal may be jointly indicated by N separate UL TCIs.

Assumed that the terminal has only two antenna panels, that is, the number of antenna panels of the terminal is N=2, then the terminal may be configured with 2 TCIs, which are simplified as TCI1 and TCI2 here. For example, one antenna panel corresponds to TCI1, and the other antenna panel corresponds to TCI2.

Each TCI corresponds to a transmitting/receiving beam of one antenna panel of the terminal and faces one transmitting TRP direction. Each TCI includes a different QCL Type-D source reference signal (QCL Type-D source RS), which may include at least one of:

channel state information reference signal (CSI-RS); or
synchronous signal broadcast channel block (SSB, Synchronous Signal/PBCH Block).

The terminal uses the antenna panel corresponding to the QCL Type-D source RS included in the TCI to send and receive. When the unified TCI framework is not configured, spatial relation information (spatialRelationInfo)1/2 indicated by an SRI combination is used.

For a scenario of communication between multiple antenna panels of the terminal and multiple TRPs, a sub-slot-based PUCCH transmission for SDM or FDM and TDM is proposed as follows.

In a PUCCH transmission of one PUCCH resource indicated by the PRI, TCI1 and TCI2 are simultaneously associated with the same DMRS port.

In one sub-slot, UCI data with the same SDM is mapped on the same time-frequency resource by different MPs/MTRPs.

Taking the terminal with two antenna panels as an example, when different antenna panels correspond to different TCIs, TCIs corresponding to the two antenna panels of the terminal form a TCI pair or a pair of TCIs.

A PUCCH resource group includes a plurality of PUCCH resources. A pair of activated or indicated TCIs may be applied to all PUCCH resources in a PUCCH resource group where the PUCCH is simultaneously.

There is an association between TCIs and PUCCH resource groups. If a preconfigured PUCCH resource group is activated or scheduled to take effect, then a pair of TCIs associated with the effective PUCCH resource group is used for the PUCCH transmission on different antenna planes of the terminal.

Different TCIs are precoded using different precoders, and a corresponding antenna panel performs sending of the PUCCH using its own precoder.

All PUCCH transmission formats are supported.

Solution 1, retransmissions of X>2 and X<=7 supported in one slot under a sub-slot-based MP/MTRP transmission scenario are extended.

One PUCCH transmission corresponds to one TO. That is, one time of PUCCH transmission is performed on one TO.

Each TO supports MTRP transmission in SDM or FDM mode.

If a number of slots for retransmissions is configured, both an intra-slot PUCCH transmission between MPs/MTRPs and an inter-slot PUCCH transmission between MPs/MTRPs are supported. At this time, a total number of sub-slot-based transmissions is:

$$N=X \times nrofSlots,$$

where X is a number of transmissions within a slot, nrofSlots is a number of slots for retransmissions (number of slots), N is a total number of sub-slot-based transmissions.

The transmission within each slot occupies the same time-frequency domain resource, each slot includes the same number of TOs.

Intra-slot frequency hopping may be supported. Each frequency hopping unit in the slot is performed on different symbol groups of the same TO.

Inter-slot frequency hopping transmission may also be supported. All TOs in a first slot correspond to one frequency, and all TOs in a second slot correspond to a second frequency.

An association between TCI1/TCI2 and the corresponding resources in each TO does not change.

Furthermore, Under FDM multiplexing, an association between TCI1/TCI2 and corresponding frequency domain resources in each slot flips in different time domain TO units.

For example, flipping is performed in a unit of TO. In a first TO, a TCI1 corresponds to a frequency domain resource allocation FDRA1, and a TCI2 corresponds to a frequency domain resource allocation FDRA2. In a second TO, the frequency domain resource allocation corresponding to TCI2 is FDRA1, and the frequency domain resource allocation corresponding to TCI1 is FDRA2.

For example, flipping is performed in a unit of slot. In all TOs of a first slot, a TCI1 corresponds to a frequency domain resource allocation FDRA1, and a TCI2 corresponds to a frequency domain resource allocation FDRA2. In all TOs of a second TO, the frequency domain resource allocation corresponding to TCI2 is FDRA1, and the frequency domain resource allocation corresponding to TCI1 is FDRA2.

The above FDRA1 and FDRA2 are indication information of frequency domain resources.

Solution 2: a total number Y of retransmissions supported by sub-slot-based MP/MTRP transmission is expanded, for example, Y <= 32. That is, retransmission in consecutive TOs across slots is allowed.

Method 2-1: frequency hopping is performed in a unit of slot, that is, different TOs within a slot use the same frequency for transmitting.

Method 2-2: frequency hopping is performed in a unit of TO, that is, a first TO uses a first frequency point for transmission, a second TO uses a second frequency point for transmission, and a carrier frequency of any two TOs for PUCCH transmission is alternately replaced.

In some possible implementations, as shown in FIG 8, a PUCCH transmission apparatus is provided. The apparatus includes:
a transmission module 8001, configured to perform, by a plurality of antenna panels of the terminal, a PUCCH transmission according to transmission configuration indications (TCIs), different antenna panels correspond to different TCIs.

In some possible implementations, the transmission module 8001 is configured to, when performing, by the plurality of antenna panels of the terminal, the PUCCH transmission according to the TCIs, the different antenna panels corresponding to the different TCIs, perform, by the plurality of antenna panels of the terminal, the PUCCH transmission based on spatial division multiplexing (SDM) according to the TCIs.

In some possible implementations, the different TCIs are associated with a same time-frequency resource.

In some possible implementations, the different TCIs are associated with a same PUCCH resource group, and the PUCCH resource group associated with the different TCIs is one group among a plurality of groups of preconfigured PUCCH resources.

In some possible implementations, the different TCIs are associated with different precoder matrices.

In some possible implementations, a PUCCH format of the PUCCH transmission is one of:

PUCCH format 0;
PUCCH format 1;
PUCCH format 2;
PUCCH format 3; or
PUCCH format 4.

In some possible implementations, the PUCCH transmission is a sub-slot-based PUCCH retransmission.

In some possible implementations, one PUCCH retransmission corresponds to one transmission occasion (TO); a number of TOs in one slot is greater than or equal to 2 and less than or equal to 7.

In some possible implementations,

a single TO supports a SDM-based PUCCH transmission for the plurality of antenna panels;
or,
a single TO supports a frequency division multiplexing (FDM)-based PUCCH transmission for the plurality of antenna panels.

In some possible implementations,
the PUCCH retransmission comprises:

an intra-slot PUCCH retransmission;
or,
an inter-slot PUCCH retransmission;

In some possible implementations, a total number of sub-slot-based PUCCH retransmissions is a product of a number of PUCCH retransmissions and a number of transmissions within a slot.

In some possible implementations, the PUCCH transmission comprises:

a transmission supporting an intra-slot frequency hopping;
or,
a transmission supporting an inter-slot frequency hopping.

In some possible implementations, a frequency domain resource associated with the TCI remains unchanged within a predetermined time unit.

In some possible implementations, the predetermined time unit is a TO.

In some possible implementations,

a frequency domain resource associated with a single TCI changes after one or more TOs;
or,
the frequency domain resource associated with the single TCI changes after one or more slots.

In some possible implementations, a total number of retransmissions supported by the PUCCH transmission is Y.

In some possible implementations, Y is less than or equal to 32.

In some possible implementations, the PUCCH transmission is a PUCCH retransmission across slots.

In some possible implementations, one PUCCH transmission corresponds to one TO;

in a case that Y PUCCH retransmissions are distributed in different slots, the PUCCCH transmission is a frequency hopping transmission in a unit of slot;
or,
in a case that the Y PUCCH retransmissions are distributed in different slots, the PUCCH transmission is a frequency hopping transmission in a unit of TO.

In some possible implementations, as shown in FIG 9, a PUCCH transmission apparatus is provided. The apparatus includes:
a receiving module 9001, configured to receive a PUCCH transmission sent by a plurality of antenna panels of a terminal according to TCIs, different antenna panels correspond to different TCIs.

In some possible implementations, the receiving module 9001 is configured to, when receiving the PUCCH transmission sent by the plurality of antenna panels of the terminal according to the TCIs, receive the PUCCH transmission sent by the plurality of antenna panels of the terminal using a SDM according to the TCIs.

In some possible implementations, the different TCIs are associated with a same time-frequency resource.

In some possible implementations, the different TCIs are associated with a same PUCCH resource group, and the PUCCH resource group associated with the different TCIs is one group among a plurality of groups of preconfigured PUCCH resources.

In some possible implementations, the different TCIs are associated with different precoder matrices.

In some possible implementations, a PUCCH format of the PUCCH transmission is one of:

PUCCH format 0;
PUCCH format 1;
PUCCH format 2;
PUCCH format 3; or
PUCCH format 4.

In some possible implementations, the PUCCH transmission is a sub-slot-based PUCCH retransmission.

In some possible implementations, one PUCCH retransmission corresponds to one transmission occasion (TO); a number of TOs in one slot is greater than or equal to 2 and less than or equal to 7.

In some possible implementations,

a single TO supports a SDM-based PUCCH transmission for the plurality of antenna panels;
or,
a single TO supports a frequency division multiplexing (FDM)-based PUCCH transmission for the plurality of antenna panels.

In some possible implementations,
the PUCCH retransmission comprises:

an intra-slot PUCCH retransmission;
or,
an inter-slot PUCCH retransmission;

In some possible implementations, a total number of sub-slot-based PUCCH retransmissions is a product of a number of PUCCH retransmissions and a number of transmissions within a slot.

In some possible implementations, the PUCCH transmission comprises:

a transmission supporting an intra-slot frequency hopping;
or,
a transmission supporting an inter-slot frequency hopping.

In some possible implementations, a frequency domain resource associated with the TCI remains unchanged within a predetermined time unit.

In some possible implementations, the predetermined time unit is a TO.

In some possible implementations,

a frequency domain resource associated with a single TCI changes after one or more TOs;
or,
the frequency domain resource associated with the single TCI changes after one or more slots.

In some possible implementations, a total number of retransmissions supported by the PUCCH transmission is Y.

In some possible implementations, Y is less than or equal to 32.

In some possible implementations, the PUCCH transmission is a PUCCH retransmission across slots.

In some possible implementations, one PUCCH transmission corresponds to one TO;

in a case that Y PUCCH retransmissions are distributed in different slots, the PUCCCH transmission is a frequency hopping transmission in a unit of slot;
or,
in a case that the Y PUCCH retransmissions are distributed in different slots, the PUCCH transmission is a frequency hopping transmission in a unit of TO.

An embodiment of the present disclosure provides a communication device, which includes:

a memory for storing instructions executable by a processor;
a processor, coupled to the memory;
in which, the processor is configured to implement the PUCCH transmission method provided by any of the aforementioned technical solutions.

The processor may include various types of storage medium, which may be a non-temporary computer storage medium that can continue to remember and store information on the communication device after the communication device loses power.

The communication device includes: a UE or a network element, which may be any one of the first to fourth network elements mentioned above.

The processor may be connected to the memory through a bus or the like for reading executable programs stored on the memory, such as at least one of the methods shown in FIG 2 and FIGs. 5 to 7.

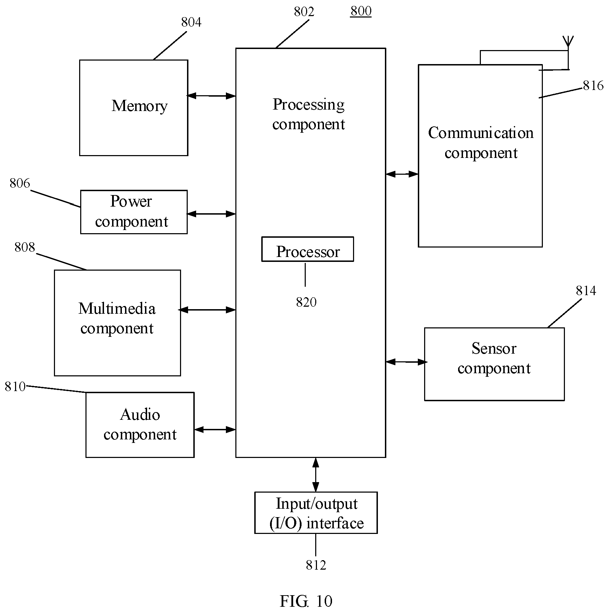

FIG 10 is a block diagram illustrating a terminal 800 according to an illustrative embodiment. For example, the terminal 800 may be a user equipment such as a mobile phone, a computer, a digital broadcasting terminal, a message transceiving equipment, a game console, a tablet equipment, a medical equipment, a fitness equipment, or a personal digital assistant.

As illustrated in FIG 10, the terminal 800 may include one or more of: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 802 for executing instructions to implement all or a part of the above method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any application or method operated on the terminal 800 for performing contraction data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 806 is configured to provide power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. When the terminal 800 is in an operation mode, such as a shooting mode or a video mode, the front camera and/or the rear camera may receive external multimedia data. Each front camera and rear camera may be a fixed optical lens system or have a focal length and an optical zoom capability.

The audio component 810 is configured to output and/or input an audio signal. For example, the audio component 810 includes a microphone ("MIC") for receiving an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker for outputting the audio signal.

The I/O interface 812 is configured to provide an interface between the processing component 802 and peripheral interface modules, such as a keyboard, a click wheel, buttons, and the like. These buttons may include, but be not limited to, a home button, a volume button, a start button, and a lock button.

The sensor component 814 includes one or more sensors for providing status assessments of various aspects of the terminal 800. For example, the sensor component 814 may detect an open/closed state of the terminal 800, relative positioning of components, e.g., the display and the keypad of the terminal 800, a position change of the terminal 800 or a component of the terminal 800, a presence or absence of user contraction with the terminal 800, an orientation or an acceleration/deceleration of the terminal 800, and a temperature change of the terminal 800. The sensor component 814 may include a proximity sensor configured to detect the presence of nearby objects without any physical contact. The sensor component 814 may also include an optical sensor, such as a CMOS or CCD image sensor, for use in an imaging application. In some embodiments, the sensor component 814 may also include an acceleration sensor, a gyro sensor, a magnetic sensor, a pressure sensor or a temperature sensor.

The communication component 816 is configured to facilitate communication, wired or wirelessly, between the terminal 800 and other devices. The terminal 800 may access a wireless network based on a communication standard, such as Wi-Fi, 30G, 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more illustrative embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an illustrative embodiment, there is also provided a non-transitory computer readable storage medium including instructions, such as the memory 804 including the instructions. The instructions may be executed by the processor 3020 in the terminal 800 for performing the above method. For example, the non-transitory computer readable storage medium may be a ROM, a RAM, a CD-ROM, a magnetic tape, a floppy disc, an optical data storage device, and the like.

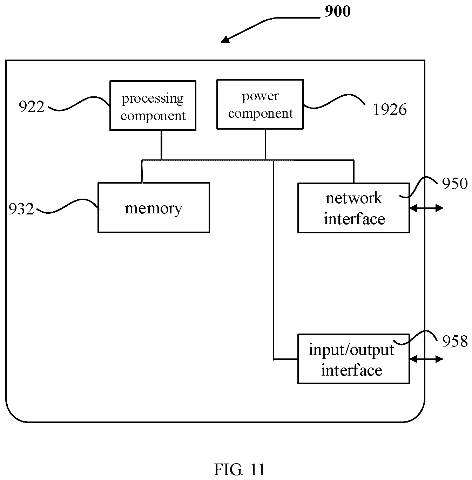

As shown in FIG 11, an embodiment of the present disclosure shows a structure of an access device. For example, the communication device 900 may be provided as a base station.

Refer to FIG 11, the communication device 900 includes a processing component 922 which further includes one or more processors and a memory resource represented by a memory 932 and used for storing instructions, such as applications, which may be executed by the processing component 922. The applications stored in the memory 932 may include one or more modules with each corresponding to a set of instructions. In addition, the processing component 922 is configured to execute the instructions so that the above-mentioned any method, such as anyone of methods shown in FIG 2 to FIG 6, applied to the access device is executed.

The communication device 900 may further include a power supply component 926 configured to execute power supply management for the communication device 900, a wired or wireless network interface 950 configured to connect the communication device 900 to a network, and an input/output (I/O) interface 958. The communication device 900 may be based on an operating system, such as Windows Server TM, Mac OS XTM, UnixTM, LinuxTM, FreeBSDTM or the like, stored in the memory 932.

After considering the specification and practicing the disclosure herein, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1.  A physical uplink control channel (PUCCH) transmission method, performed by a terminal, comprising:
    performing, by a plurality of antenna panels of the terminal, a PUCCH transmission according to transmission configuration indications (TCIs), wherein different antenna panels correspond to different TCIs.

2.  The method according to claim 1, wherein performing, by the plurality of antenna panels of the terminal, the PUCCH transmission according to the TCIs, the different antenna panels corresponding to the different TCIs, comprises:
    performing, by the plurality of antenna panels of the terminal, the PUCCH transmission based on spatial division multiplexing (SDM) according to the TCIs.

3. The method according to claim 1, wherein the different TCIs are associated with a same time-frequency resource.

4. The method according to any one of claims 1 to 3, wherein the different TCIs are associated with a same PUCCH resource group, and the PUCCH resource group associated with the different TCIs is one group among a plurality of groups of preconfigured PUCCH resources.

5. The method according to any one of claims 1 to 4, wherein the different TCIs are associated with different precoder matrices.

6. The method according to any one of claims 1 to 5, wherein the PUCCH transmission is a sub-slot-based PUCCH retransmission.

7. The method according to claim 6, wherein one PUCCH retransmission corresponds to one transmission occasion (TO);
a number of TOs in one slot is greater than or equal to 2 and less than or equal to 7.

8. The method according to claim 6 or 7, wherein

a single TO supports a SDM-based PUCCH transmission for the plurality of antenna panels;
or,
a single TO supports a frequency division multiplexing (FDM)-based PUCCH transmission for the plurality of antenna panels.

9. The method according to any one of claims 6 to 8, wherein
the PUCCH retransmission comprises:

an intra-slot PUCCH retransmission;
or,
an inter-slot PUCCH retransmission.

10. The method according to any one of claims 6 to 9, wherein a total number of sub-slot-based PUCCH retransmissions is a product of a number of PUCCH retransmissions and a number of transmissions within a slot.

11. The method according to any one of claims 6 to 10, wherein the PUCCH transmission comprises:

a transmission supporting an intra-slot frequency hopping;
or,
a transmission supporting an inter-slot frequency hopping.

12. The method according to any one of claims 6 to 11, wherein a frequency domain resource associated with the TCI remains unchanged within a TO.

13. The method according to any one of claims 6 to 11, wherein,

a frequency domain resource associated with a single TCI changes after one or more TOs;
or,
the frequency domain resource associated with the single TCI changes after one or more slots.

14. The method according to any one of claims 1 to 6, wherein a total number of retransmissions supported by the PUCCH transmission is Y, where Y is less than or equal to 32.

15. The method according to claim 14, wherein the PUCCH transmission is a PUCCH retransmission across slots.

16. The method of claim 15, wherein one PUCCH transmission corresponds to one TO;

in a case that Y PUCCH retransmissions are distributed in different slots, the PUCCCH transmission is a frequency hopping transmission in a unit of slot;
or,
in a case that the Y PUCCH retransmissions are distributed in different slots, the PUCCH transmission is a frequency hopping transmission in a unit of TO.

17. A physical uplink control channel (PUCCH) transmission method, performed by a base station, comprising:
receiving a PUCCH transmission sent by a plurality of antenna panels of a terminal according to TCIs, wherein different antenna panels correspond to different TCIs.

18. The method according to claim 17, wherein receiving the PUCCH transmission sent by the plurality of antenna panels of the terminal according to the TCIs comprises:
receiving the PUCCH transmission sent by the plurality of antenna panels of the terminal using a SDM according to the TCIs.

19. The method according to claim 17, wherein the different TCIs are associated with a same time-frequency resource.

20. The method according to any one of claims 17 to 19, wherein the different TCIs are associated with a same PUCCH resource group, and the PUCCH resource group associated with the different TCIs is one group among a plurality of groups of preconfigured PUCCH resources.

21. The method according to any one of claims 17 to 20, wherein the different TCIs are associated with different precoder matrices.

22. The method according to any one of claims 17 to 21, wherein the PUCCH transmission is a sub-slot-based PUCCH retransmission.

23. The method according to claim 22, wherein one PUCCH retransmission corresponds to one transmission occasion (TO);
a number of TOs in one slot is greater than or equal to 2 and less than or equal to 7.

24. The method according to claim 22 or 23, wherein

a single TO supports a SDM-based PUCCH transmission for the plurality of antenna panels;
or,
a single TO supports a frequency division multiplexing (FDM)-based PUCCH transmission for the plurality of antenna panels.

25. The method according to any one of claims 22 to 24, wherein
the PUCCH retransmission comprises:

an intra-slot PUCCH retransmission;
or,
an inter-slot PUCCH retransmission.

26. The method according to any one of claims 22 to 25, wherein a total number of sub-slot-based PUCCH retransmissions is a product of a number of PUCCH retransmissions and a number of transmissions within a slot.

27. The method according to any one of claims 22 to 26, wherein the PUCCH transmission comprises:

a transmission supporting an intra-slot frequency hopping;
or,
a transmission supporting an inter-slot frequency hopping.

28. The method according to any one of claims 22 to 27, wherein a frequency domain resource associated with the TCI remains unchanged within a TO.

29. The method according to any one of claims 22 to 27, wherein,

a frequency domain resource associated with a single TCI changes after one or more TOs;
or,
the frequency domain resource associated with the single TCI changes after one or more slots.

30. The method according to any one of claims 17 to 21, wherein a total number of retransmissions supported by the PUCCH transmission is Y, where Y is less than or equal to 32.

31. The method according to claim 30, wherein the PUCCH transmission is a PUCCH retransmission across slots.

32. The method of claim 31, wherein one PUCCH transmission corresponds to one TO;

in a case that Y PUCCH retransmissions are distributed in different slots, the PUCCCH transmission is a frequency hopping transmission in a unit of slot;
or,
in a case that the Y PUCCH retransmissions are distributed in different slots, the PUCCH transmission is a frequency hopping transmission in a unit of TO.

33. A physical uplink control channel (PUCCH) transmission apparatus, comprising:
a transmission module, configured to perform, by a plurality of antenna panels of the terminal, a PUCCH transmission according to transmission configuration indications (TCIs), wherein different antenna panels correspond to different TCIs.

34. A physical uplink control channel (PUCCH) transmission apparatus, comprising:
a receiving module, configured to receive a PUCCH transmission sent by a plurality of antenna panels of a terminal according to TCIs, wherein different antenna panels correspond to different TCIs.

35. A communication device, comprising a processor, a transceiver, a memory, and an executable program stored on the memory and capable of being run by the processor, wherein the processor is configured to implement the method according to any one of claims 1 to 16 or the method according to any one of claims 17 to 32 when running the executable program.

36. A computer storage medium storing an executable program, wherein, when the executable program is executed by a processor, the method according to any one of claims 1 to 16 or the method according to any one of claims 17 to 32 is implemented.

FIG. 1

S2001, performing, by a plurality of antenna panels of the terminal, a PUCCH transmission according to TCIs, different antenna panels correspond to different TCIs

FIG. 2

transceiving
node 1

transceiving
node 2

FIG. 3

frequency

slot 1    slot 2    slot 3    slot 4    time

beam 1

beam 2

FIG. 4a

frequency

beam 1

beam 2

slot 1     slot 2     slot 3     slot 4     time

FIG. 4b

| terminal | | base station |
|---|---|---|

S5001, receiving a PUCCH transmission sent by a plurality of antenna panels of a terminal according to TCIs, different antenna panels correspond to different TCIs

FIG. 5

| terminal | | base station |
|---|---|---|

S6001, receiving a network signaling is, indicating TCIs for a plurality of antenna panels of the terminal to perform PUCCH transmission, different antenna panels correspond to different TCIs

FIG. 6

terminal

Base station

S7001, sending a network signaling is, indicating TCIs for a plurality of antenna panels of the terminal to perform PUCCH transmission, different antenna panels correspond to different TCIs

FIG. 7

PUCCH transmission apparatus

transmission module
8001

FIG. 8

PUCCH transmission apparatus

receiving module 9001

FIG. 9

FIG. 10

**900**

FIG. 11

## INTERNATIONAL SEARCH REPORT

| | | International application No. |
|---|---|---|
| | | **PCT/CN2022/090767** |

| **A.** | **CLASSIFICATION OF SUBJECT MATTER** |
|---|---|

H04W 72/04(2009.01)i;  H04B 7/06(2006.01)i;  H04L 5/00(2006.01)i

According to International Patent Classification (IPC) or to both national classification and IPC

| **B.** | **FIELDS SEARCHED** |
|---|---|

Minimum documentation searched (classification system followed by classification symbols)

H04W; H04B; H04L

Documentation searched other than minimum documentation to the extent that such documents are included in the fields searched

Electronic data base consulted during the international search (name of data base and, where practicable, search terms used)

CNTXT; VEN; ENTXTC; CNKI; 3GPP: 物理上行控制信道, 终端, 传输配置指示, 天线, 面板, 组, 端口, 不同, 多个, 波束, 方向, 传输点, 收发点, PUCCH, UE, TCI, antenna, panel, group, port, different, multi, beam, direction, TRP

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | WO 2020042123 A1 (GUANGDONG OPPO MOBILE COMMUNICATIONS CO., LTD.) 05 March 2020 (2020-03-05) <br> description, pages 1-14, and figures 1-8 | 1-36 |
| X | CN 113906789 A (FG INNOVATION CO., LTD.) 07 January 2022 (2022-01-07) <br> description, paragraphs [0001]-[0151], and figures 1-9 | 1-36 |
| A | CN 111245488 A (SONY CORP.) 05 June 2020 (2020-06-05) <br> entire document | 1-36 |
| A | CN 113973369 A (VIVO COMMUNICATION TECHNOLOGY CO., LTD.) 25 January 2022 (2022-01-25) <br> entire document | 1-36 |
| A | SAMSUNG. ""R1-2008148 Multi-beam enhacements Final"" <br> *3GPP TSG RAN WG1 #103-e R1-2008148*, 01 November 2020 (2020-11-01), <br> section 6 | 1-36 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2022** | **14 December 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/090767**

| Patent document cited in search report | | | Publication date (day/month/year) | Patent family member(s) | | | Publication date (day/month/year) |
|---|---|---|---|---|---|---|---|
| WO | 2020042123 | A1 | 05 March 2020 | EP | 3817474 | A1 | 05 May 2021 |
| | | | | JP | 2022501859 | A | 06 January 2022 |
| | | | | AU | 2018439558 | A1 | 04 March 2021 |
| | | | | US | 2021136739 | A1 | 06 May 2021 |
| | | | | KR | 20210048490 | A | 03 May 2021 |
| | | | | TW | 202013921 | A | 01 April 2020 |
| CN | 113906789 | A | 07 January 2022 | WO | 2020143711 | A1 | 16 July 2020 |
| | | | | EP | 3909295 | A1 | 17 November 2021 |
| | | | | US | 2020229098 | A1 | 16 July 2020 |
| CN | 111245488 | A | 05 June 2020 | US | 2021391899 | A1 | 16 December 2021 |
| | | | | KR | 20210095626 | A | 02 August 2021 |
| | | | | EP | 3890203 | A1 | 06 October 2021 |
| | | | | WO | 2020108473 | A1 | 04 June 2020 |
| | | | | CN | 113169780 | A | 23 July 2021 |
| CN | 113973369 | A | 25 January 2022 | None | | | |

Form PCT/ISA/210 (patent family annex) (January 2015)